# EUROPEAN PATENT SPECIFICATION

(11) **EP 0 994 666 B1**
(45) Date of publication and mention of the grant of the patent: **21.09.2005**
(21) Application number: 98932423.1
(22) Date of filing: 13.07.1998
(51) Int. Cl.: A47J 27/21, H05B 3/82

(54) **Thick Film Electric Heaters**
Dickfilm Heizeinrichtungen
Element chauffant à couche épaisse

(30) Priority: 11.07.1997 GB 9714691; 28.11.1997 GB 9725365
(43) Date of publication of application: 26.04.2000
(73) Proprietor: STRIX LIMITED, Isle of Man IM9 2RG (GB)
(72) Inventor: TAYLOR, John, Crawshaw, Castletown, Isle of Man IM9 1HA (GB); MEEKS, Alan Michael George, Basingstoke, Hampshire RG24 8XX (GB); ELLA, John, Berkshire R G41 2TR (GB)
(74) Representative: Leckey, David Herbert
(86) International application number: PCT/GB1998/002047
(87) International publication number: WO 1999/002080

(56) References cited:
- EP-A- 0 510 863
- WO-A-94/18807
- WO-A-97/04694
- DE-U- 29 513 126
- GB-A- 2 282 957
- GB-A- 2 298 723
- GB-A- 2 308 921
- US-A- 3 934 118

## Description

The present invention relates to thick film electric heaters.

Such heaters are beginning to be used in water heating appliances, as for example, described in the Applicant's WO 97/04694.

Such heaters comprise a resistive track laid down on an insulating substrate.

In order to protect the heater in the event of serious overheating (as might occur in a water heating appliance should an overheat protection device fail), it has been proposed in WO 97/39603 to provide a bridge of insulator over the track which is configured such that it will become open circuit through the bridge above a predetermined temperature.

The present invention is a development of that concept.

In accordance with the invention there is provided a thick film heater comprising an electrical resistive track provided on an insulating substrate, two predetermined sections of said track having a predetermined current carrying capacity being bridged by a glass material, the configuration of the track and the glass material being chosen such that at a predetermined temperature, the leakage current between the track sections rises to the extent that it causes a failure overload current to flow through one or both of said sections which is substantially above its current carrying capability characterised in that said sections are positioned away from at least one end of the track so as to limit the said overload current.

Preferably the glass material is applied as an overglaze.

Preferably the track is provided with a localised region having a relatively small potential drop thereacross adapted to receive a thermally sensitive actuator of a control for the heater.

Preferably that region is a serpentine region.

Preferably the serpentine region comprises at least two parallel track lengths connected by bridges of a high conductivity material.

Preferably the serpentine region is arranged between said one of said track sections and said end of said track.

Preferably the heater comprises lengths of track arranged geometrically parallel to each other, said lengths being bridged by bridges of a high conductivity material.

Preferably the heater comprises high power and low power heating tracks.

The invention also extends to liquid heating apparatus incorporating a heater in accordance with the invention, for example an airpot.

A preferred embodiment of the invention will now be described by way of example only, with reference to the accompanying drawings in which:-
Figure 1 is a perspective view of a heater in accordance with the invention assembled to a control unit;
Figure 2 is a section through the mounting for the assembly of Figure 1;
Figure 3 is a view of the heater of the assembly of Figure 1;
Figure 4 is a schematic view of the various switching components of the control, the control itself falling outside the scope of the invention, but being retained for purposes of explanation;
Figure 5 shows in greater detail the components of the low/high power mechanism of the control unit;
Figure 6 shows in greater detail the components of the long/ short boil mechanism of the control unit;
Figure 7 shows the reboil mechanism of the control unit;
Figure 8 is a view of the side of the control unit which in use will face the heater of Figure 3;
Figure 9 shows a perspective view of the simmer unit of the control;
Figure 10 shows an underneath plan view of the simmer unit of Figure 8;
Figure 11 shows in greater detail the components of the dry boil mechanism of the control; and
Figure 12 shows heater in accordance with the invention mounted on the base moulding for a liquid heating vessel.

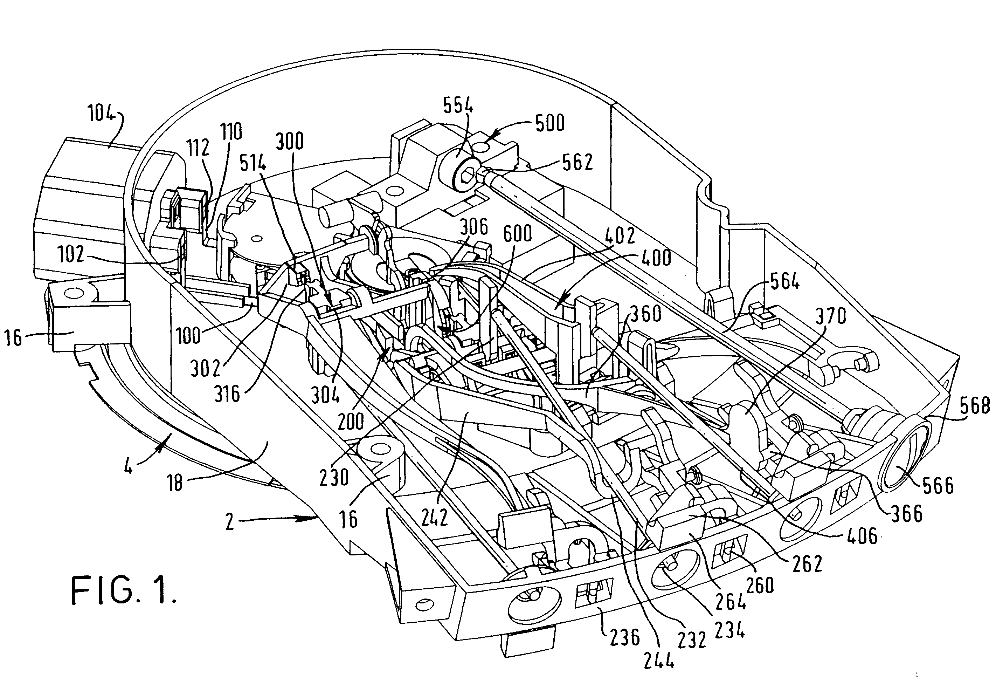

Figures 1 to 12 illustrate an embodiment of the invention. Whilst the invention relates to a thick film heater, a description of a control for use with the heater is included to help explain certain features of the heater. For the avoidance of doubt, however, the control *per se* does not form part of the claimed invention.

### GENERAL ARRANGEMENT

With reference to Figures 1 to 12, there is shown a control unit 2 which is mounted against a thick film printed plate heater 4. The control unit 2 and heater 4 are assembled together before being mounted together to close opening 6 in the base 8 of a plastics airpot body.

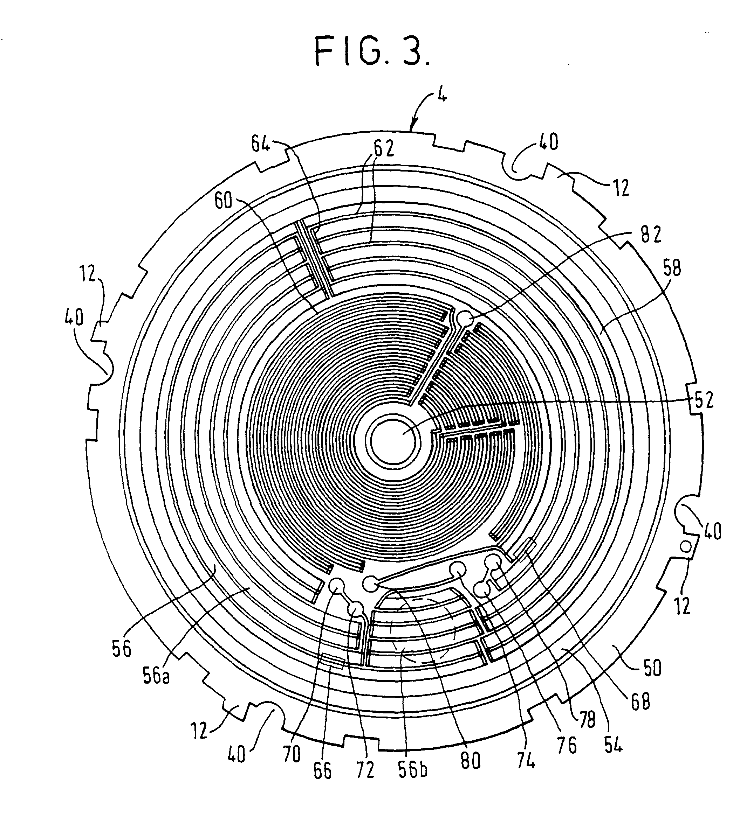

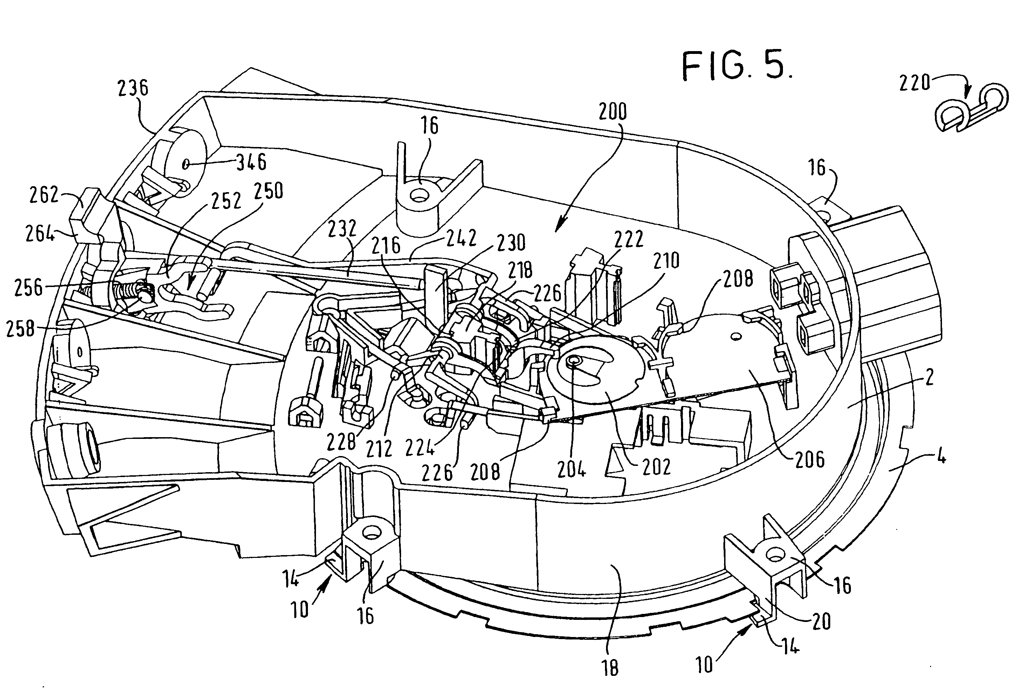

As can be seen for example in Figure 5, the control unit 2 and the heater 4 are assembled through a plurality of bayonet type fittings 10. To this end, the heater 2 is provided with four equispaced tangs 12 (Fig. 3) which engage under respective tongues 14 (Fig. 5) which extend circumferentially from four hollow mounting bosses 16 provided on the moulded housing 18 of the control unit 2. As can be seen in Fig. 5, the tangs 12 abut the rear wall 20 of the bosses 16 so as to locate the heater 4 rotationally with respect to the control unit 2, to ensure proper alignment of the various electrical connections between the control unit 2 and the heater 4 as will be described in further detail later.

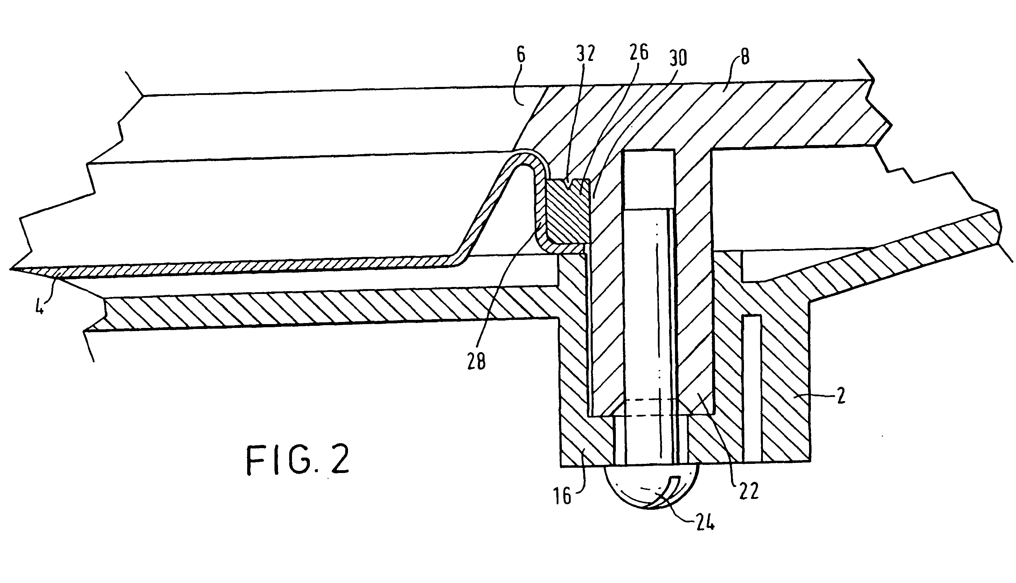

As can be seen in Figure 2, the mounting bosses 16 engage over mounting pillars 22 provided on the airpot body base 8 for receiving clamping screws 24 therethrough. It will be seen that a silicone rubber 26 seal 26 is arranged between an L shaped sealing flange 28 provided on the periphery of the heater 4 and an L shaped seat 30 provide on the airpot body 8 around the opening 6. The bottom surface of the boss 16 abuts the top of the mounting pillar 22 so as to control the clamping pressure applied to the seal 26 and prevent overtightening which might deform and damage the respective parts. As will be appreciated, the arrangement illustrated will compress the seal axially and radially so as to make a sealing contact along all the opposed surfaces of the sealing flange 28 and the seat 30. To allow the seal 26 to expand against these surfaces without effectively solidifying, a circumferential rib 32 is provided on one of the moulding seats 30. In this way an extremely satisfactory seal can be obtained.

It will also be noted from Figure 3 that the heater 4 has a number of semicircular recesses 40 in its outer periphery adjacent the bayonet tangs 12. The body mounting pillars 22 pass through and engage in these recesses 40 during mounting, so that once the assembly is mounted to the vessel body, they will prevent rotation of the heater relative to the control unit 2.

### CONTROL UNIT

Turning now to the features of the control unit 2, as will be described in much greater detail below, the control unit 2 comprises a number of interrelated control mechanisms which are mounted in the control housing 18. These may be identified broadly as follows:
1. A high power/ low power boil mechanism 200, which will allow a user to boil liquid in the airpot at a high power or low power, and which will automatically switch to a low power setting after the liquid in the vessel has boiled;
2. A long boil / short boil mechanism 300 which will allow a user to select a long or a short boiling time, and automatically switch to simmer after the liquid has boiled;
3. A reboil mechanism 400 which will allow a user to reboil the liquid in the vessel after it has boiled;
4. A simmer unit 500 which will allow liquid in the vessel to be kept at a desired temperature after boiling; and
5. A dry switch on protection mechanism 600 which will disconnect the power supply to the heater in the event it overheats, for example if the airpot boils dry or it is switched on without any water in it.

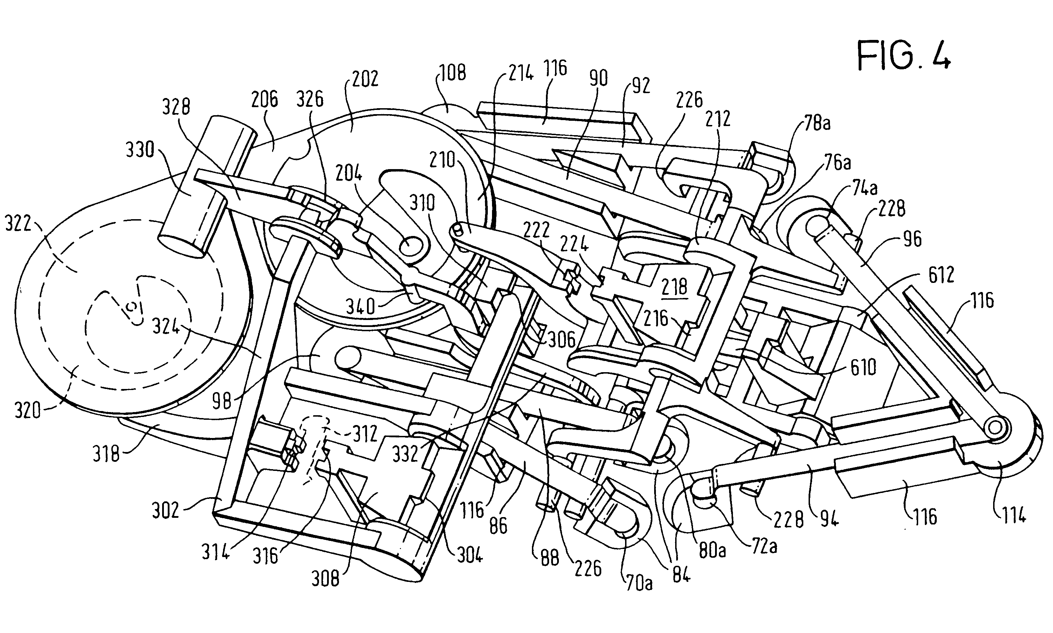

Only the general locations of these mechanisms are indicated on Figure 1 and they will be described in greater detail below. Firstly, however, it is useful to describe the electrical detail of the heater 4 of the preferred embodiment and the various electrical connections made thereto with reference to Figures 2 and 4.

### HEATER

The heater 4 is a thick film printed heater. Such heaters are well known in the art and are now beginning to be used for water heating purposes. Indeed, their use has already been proposed in the context of airpots in our earlier WO97/04694.

Briefly, however, the heater structure is very similar to that described in WO97/04694, comprising a stainless steel plate 50 having a central sump 52 around which is deposited an insulating dielectric layer 54 on top of which is provided, a series of serpentine resistive heating track sections 56, 58, 60. A protective overglaze (not shown) is provided over the tracks. The plate 50 has a number of features around its periphery for mounting purposes, as have already been described above.

The first and second track sections 56, 58 are arranged around the outside of the heater 4 and are each nominally rated at 1000W. These track sections are intended for heating liquid in the airpot to boiling. The other, inner, track section 32 is rated at about 80W and is intended to act as a simmer element when placed in series with the other two track sections.

As can be seen, the respective track sections 56, 58, 60 are each serpentine, comprising a plurality of parallel track lengths, the respective ends of which are connected by bridges 64 of a low resistance material such as silver. The silver bridges 64 may be printed in a suitable ink form over or under the track sections during manufacture of the heater and then fired with the heater tracks 62. This arrangement provides a particularly compact and even track arrangement, which means that a smaller heater plate may be used for a given heating power, thereby reducing costs.

The first track section 56 is actually arranged in two serpentine portions 56a, 56b. The smaller, 56b of the two portions is intended to receive a dry switch on actuator 50 as will be described later. It occupies a relatively small area (about the same area as the dry switch on actuator) and accounts for only about 20% of the total resistance of the track section 56. This means that there is a relatively low potential drop across the portion 56b, thereby reducing the possibility of shorting through the actuator 50.

The outer track sections 56, 58 are provided with respective regions 66, 68 which are so configured as preferentially to self protect by becoming open circuit in the event of a serious overheating of the respective element section. This feature is described in greater detail in WO 97/39603, to which reference should be made for further details. Essentially, however, should the heater overheat, the resistance of the overglaze will fall so as to allow a leakage current to flow between the adjacent track portions. This in turn generates further heat, which further increases the leakage current. This very quickly leads to the leakage current running away, to the extent that it exceeds the design rating for the track, which vaporises, so disabling the heater. It will be seen that in this embodiment the region 66 at least is situated at a spacing from one end of the track 56. This is intended to limit the overload current to a value which will not lead to fusing of the normal appliance fuse nor indeed the house fuse by leaving a length of resistive track between the region 66 and the terminal of the heater track. The region 66 may be spaced from either or both ends of the track 56 to give the desired response.

One end of the track section 56 is provided with a pair of spaced terminal contacts 70, 72 and the other end with a terminal contact 74. Similarly one end of the track section 58 is provided with two terminal contacts 76, 78 and its other end with a single terminal contact 80. That other end of the track section 58 is also connected to one end of the simmer track section 60, so that the terminal contact 80 acts as an interconnection between both track sections 58, 60. The other end of the simmer track section 60 is provided with a terminal contact 82.

Electrical connections are made to each of these terminal contacts by respective contacts provided in the control unit 2 as will now be described in greater detail below.

### ELECTRICAL CONNECTIONS TO THE HEATER TRACK

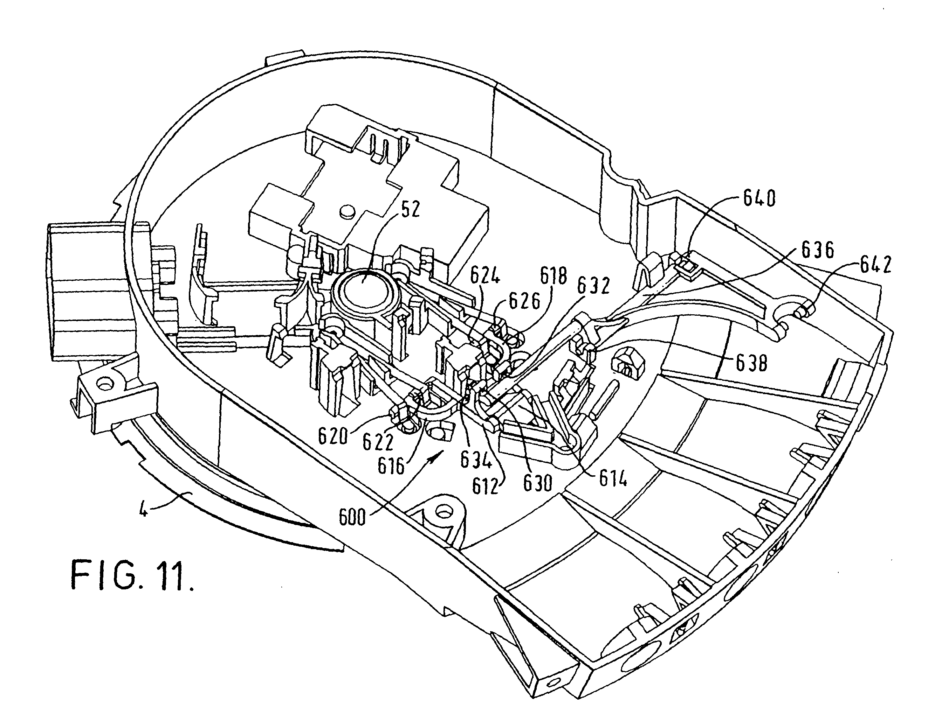

As can be seen most clearly from Figure 4, the control moulding 18 is provided with six apertures 84 therethrough to allow access to the various heater track terminal contacts 70-80. These apertures are built up on the heater facing side (see Figure 11), so as to act to shield and contain any arcing produced at the contacts. The control moulding 18 mounts six low force leaf springs 86, 88, 90, 92, 94 and 96, arranged in respective pairs. Each leaf spring has an electrical contact 70a, 72a, 74a, 76a, 78a, 80a, mounted on its free end for contacting the corresponding respective track terminal contacts 70-80 through the apertures 84.

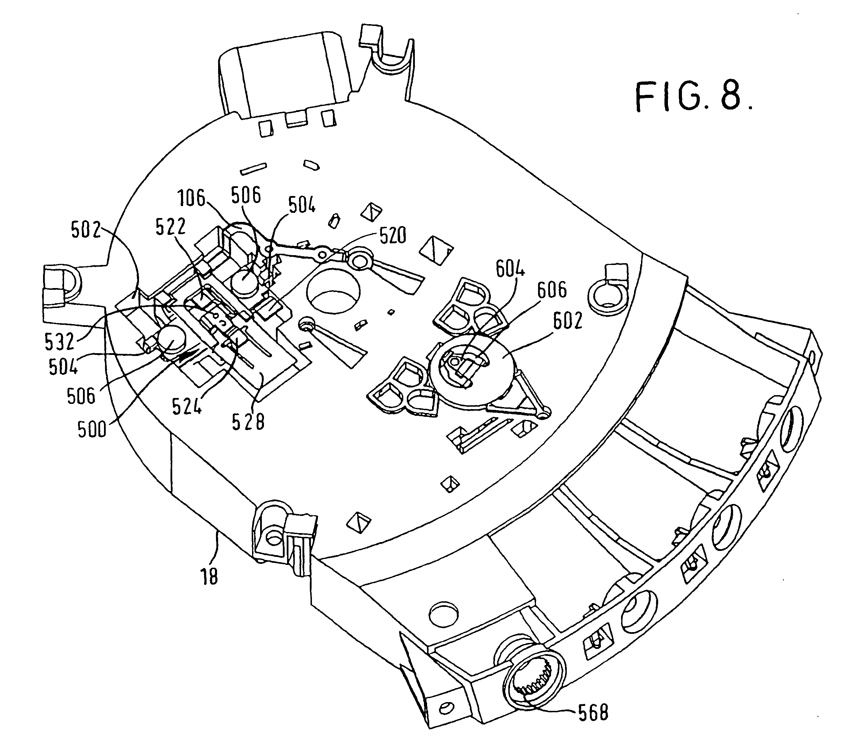

A first pair of leaf springs 86, 88, 56 are rivetted together at one end to a mounting boss 98 to which is also mounted a conductive strip 100 (Figure 1) running from the neutral terminal pin 102 of an electrical connector 104 for connection to an external power supply. A further conductive link 106 runs from the neutral boss under the control moulding 18 as shown in Figure 8 for connection to the simmer unit 500. A second pair of leaf springs 90, 92 is mounted to a further boss 108 to which is also connected a conductive strip 110 running from the line terminal pin 112 of the connector 104. The third pair of leaf springs 94, 96 are commonly rivetted to a third boss 114. The leaf springs 86-96 are received and located within respective channels 116 moulded into the control moulding 18.

The arrangement of the leaf springs 86-96 will allow the heating track sections 56, 58 to be placed selectively in series or in parallel, so as to vary the power of the element during heating of the airpot's contents to boiling, or to be placed together in series with the simmer track portion 60 to produce a low power simmer. This is achieved by the movement of a number of pivotally mounted lever arms which engage the various leaf springs 86-96. These lever arms form parts of the various respective mechanisms mentioned above, and for sake of simplicity, these lever arms will be described in the context of those mechanisms below.

### HIGH POWER/LOW POWER MECHANISM (FIG. 5)

As stated above, this mechanism 200, will allow a user to choose to boil liquid in the airpot at either high power or low power, and will automatically switch the heater 4 to a low power setting after the liquid in the airpot vessel has boiled. Referring primarily to Figures 4 and 5, the mechanism comprises a snap acting bimetallic actuator 202 of the type described in GB1542252 which is mounted by its central tongue 204 on a "spectacles" shaped copper plate 206 which is clipped into a mounting slot 208 provided in the control moulding 18. The lower surface of the plate 206 will in use abut in thermal contact with the base of the sump 52 of the heater plate 50.

The nose 210 of a pivotally mounted double lever arm 210 is positioned over a peripheral portion 214 of the actuator 202. The double lever arm 212 is pivotally mounted in a V groove 216 provided in a mounting pillar 218 upstanding from the floor of the control moulding 18. The lever arm 212 is biased into, and retained in the V groove 216 by an Q spring 220 (shown separately in Figure 5 for ease of understanding) mounted between respective seats 222, 224 provided on the rear of the nose 210 and the front face of the pillar 218. It will be appreciated that the lever arm 212 is bistable, being urged towards one or other of its pivotal positions by the Ω spring 220 will also act to retain the lever arm 212 in one or other of its operating positions.

The double lever arm 212, which fits around the mounting pillar 218, has a pair of forwardly projecting arms 226, which extend under the leaf springs 86, 92. It also has a pair of rearwardly extending arms 228 which extend under the leaf springs 94, 96. It will be appreciated that depending on the position of the double lever arm 212, either the leaf springs contacts 70a, 78a will be lifted away from their respective corresponding heater terminal contacts 70,78 with the leaf springs contacts 72a, 74a in contact with the heater terminal contacts 72, 74, or vice versa.

In the latter condition as illustrated in Figure 5, the heater track sections 56, 58 will be connected electrically in parallel, as the neutral side of the electrical supply will be connected through the leaf springs 86, 88 and contacts 70a, 80a to the terminal contacts 70, 80 of the track sections and the line side of the supply connected to the other terminal contacts 76, 78 of the track sections through leaf springs 90, 92 and contacts 76a, 78a. Thus the electrical supply will be connected across track section 56 through terminal contacts 70, 74 and across track section 58 through terminal contacts 78, 80. As each track section is rated at 1kW, this will deliver 2kW heating power.

However, in the other condition with the leaf springs 86, 92 and contacts 70a, 78a raised, the track sections 56, 58 will be arranged electrically in series. A neutral connection is made to track portion 58 through leaf spring 88, contact 80a and terminal contact 80, and a line connection made to track portion 56 through leaf spring 90, contact 74a and terminal contact 74. The leaf springs 94, 96 then bridge the terminal contacts 72, 76 of the tracks 56, 58 to connect the track sections in series, and so deliver 500W heating power.

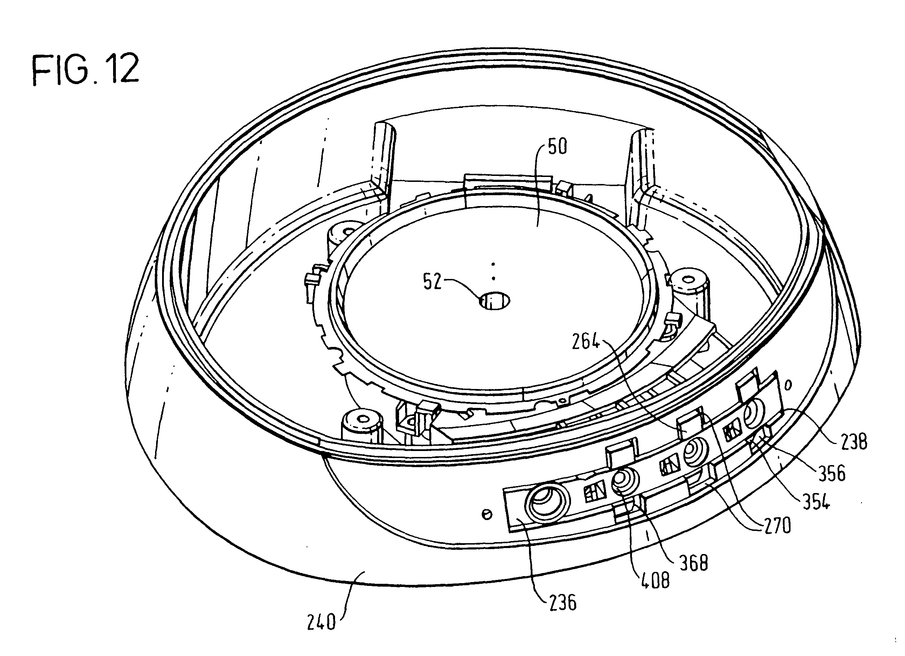

As is shown in Figures 1 and 3, an upstanding arm 230 is provided on the rear of the double lever arm 212. This is linked to a push rod 232 which extends slidably into an opening 234 in the front face 236 of the control moulding 18. As shown in Figure 12, when the control unit is installed in the airpot, this face 236 will be arranged behind a window 238 in a base moulding 240 of the airpot. The window will be covered with a flexible diaphragm (not shown) to allow the end of the rod 232 to be pressed by a user. It will be appreciated that when the button is pushed, the double lever arm 212 will pivot anticlockwise (in the sense of Figure 1) about its mounting into the position shown in Figure 5, i.e. into the high power boiling condition.

Also as shown in Figures 1 and 5, an arcuate arm 242 is integrally moulded to one side of the double lever arm 212. This has a U shaped saddle 244 which allows the passage of the push rod 232, and at its free end engages an indicator mechanism 250. The indicator mechanism 250 comprises a bistable rocker arm 252 pivotally mounted in a seat provided on the rear of the front wall 236 of the control moulding 18. The rocker arm 252 is biased into its seat and urged into one or other of its operative positions by a coil spring 256 which is anchored around a lug 258 on the rocker arm 252 and a post 260 in the front wall 236 of the moulding 18. The rocker arm 252 has symmetrically arranged upwardly and downwardly projecting heads 262 (only the upper one of which is visible in Figure 5), each of which with a planar indicator face 264 which is highly coloured, for example having a "dayglow" finish. These heads 262 are arranged to lie behind respective upper and lower windows 270 in the base moulding 240 of the airpot as illustrated in Figure 12.

In the position shown in Figure 5, the upper face 264 will lie behind its window 270, which will thus appear illuminated, indicating high power heating. However, if the double lever arm 212 moves to its other position, the arm 230 will trip the indicator mechanism to its other position so that the face 264 moves away from its window 270 (which will then appear dark), and the other head 262 will then move into position in, and apparently illuminate, its window 270 thereby indicating low power heating.

The arcuate arm 242 connected to the double lever arm 212 engages the indicator arm 252 with a lost motion so that the actuator 202 does not have also to move the indicator mechanism when it operates, thereby reducing the forces on the actuator. The indicator arm 252 is actually picked up by the arm 240 after the double lever arm 212 has been tripped by the actuator 102.

The mechanism 200 described above not only allows a user to select a high power boil at will, it also ensures that once liquid in the vessel boils, it will automatically reduce the power when boiling occurs.
This is extremely important, since airpots are sealed containers, and if left to boil for any period of time at 2kW, they could prove very dangerous for a user. Assuming that the control is in the high power boil condition shown in Figures 3 and 4, when liquid in the airpot vessel boils, the bimetallic actuator 202 will operate by thermal conduction through the sump 52 of the heater 4 and the plate 206 within a predetermined time, say 5 seconds. This will cause the periphery of the actuator to snap upwardly, carrying with it the nose 210 of the double lever arm 212. The arm 212 will then pivot overcentre with respect to the omega spring 220, causing the arms 226 to lift the leaf springs 86, 92 and allowing the arms 228 to lower the leaf springs 94, 96. Thus the heater tracks 56, 58 will be switched from a parallel to series connection, i.e. to a low power boil setting. At the same time the indicator 252 will change condition from its high power position to indicate the low power setting.

Of course, if the airpot was being boiled at low power, the operation of the actuator 202 will have no effect on the heating power, as the nose 210 of the lever arm 212 will be out of engagement with the actuator 202.

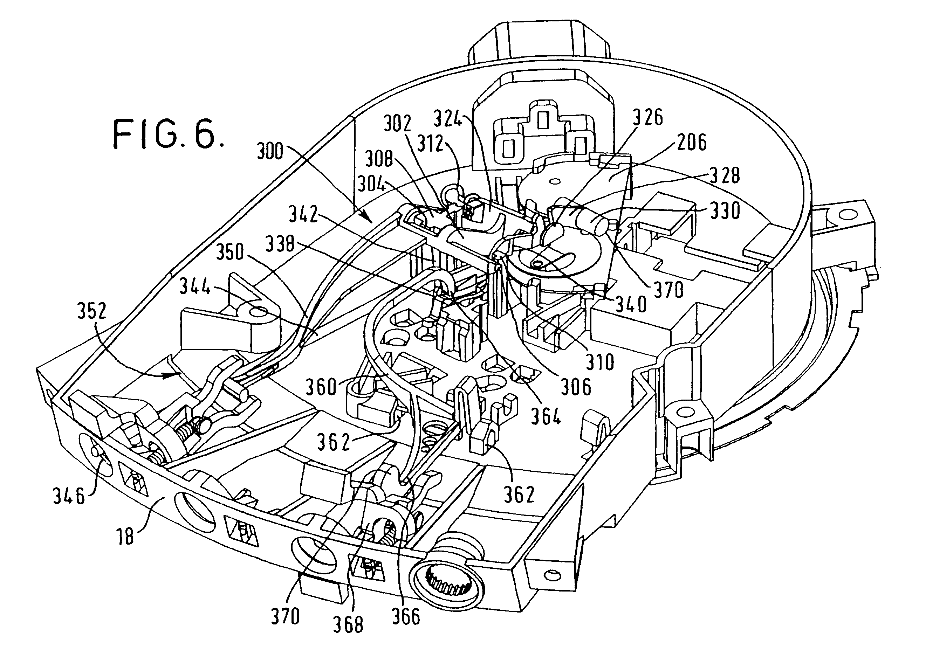

### LONG BOIL / SHORT BOIL MECHANISM (FIG 6)

The low power/high power mechanism described above only determines whether liquid in the airpot will be boiled at high power or low power. The long/short boil mechanism 300 described primarily with reference to Figures 1, 4 and 6, allows a user to select a short boil or a long boil time and automatically sets the airpot to simmer after the desired boiling time.

The mechanism 300 comprises a selector arm 302 which is pivotally mounted in V grooves 304, 306 on respective spaced mounting pillars 308,310 provided in the control moulding 8. The selector arm 302 is bistable and is biased into the grooves 304, 306 and one or other of its operating positions by an Ω spring 312 which acts between respective seats 314, 316 provided on the selector arm 302 and mounting pillar 308.

Extending in one direction from the selector arm 302 is a actuating arm 318 which engages with the peripheral rim 320 of a bimetallic actuator 322 which is mounted to the lower face of the spectacle shaped plate 206. Furthermore, at one end of a cross limb 324 of the selector arm 302 is provided a journal 326 for a pivotally mounted arm 328. The arm 328 clips into the journal 326, and has a counterweight 330 formed at one end, and a leaf spring lifting arm 332 at its other end. The leaf spring lifting arm 332 extends under the mounting limb 334 of the selector arm 302 and has a lug 338 which engages under leaf spring 88. The leaf spring lifting arm 332 also has an abutment pillar 340 which engages the periphery of the bimetallic actuator 202.

A leg 342 (Figure 6) extends downwardly from the mounting limb 334 of the selector.arm 302 and engages a push rod 344 which extends through an aperture 346 in the front face of the control moulding 18. This will be covered by a flexible diaphragm in the same way as the boiling power push rod 232 and will allow a user to select a long boil time, as will be explained further below.

An arcuate arm 350 extends away from the cross limb 334 and engages in a boiling time indicator 52 identical in construction and operation to the boiling power indicator described above, and which will indicate whether the airpot is in a long boil or short boil mode. In the condition shown in Figure 6, the mechanism is in a long boil mode, and one indicator face 354 will be arranged in a window 356 in the airpot base moulding 240 (see Fig. 12).

Finally, a further arcuate arm 360 (Figure 6), which is pivotally mounted in bearings 362 in the control moulding 18 has a nose 364 which rests on the leaf spring 88. The other end 366 of the arm engages with a yet further indicator mechanism 368 which is identical in construction and operation to the other indicator mechanisms described above and which will indicate whether the airpot is either boiling or simmering, as will be described further below. The end 366 is provided with an integral counterweight 370 to assist the mechanism 268 to return to its baking position.

Assuming that the mechanism is in the short boil condition, the selector arm 302 will be the condition shown in Figure 4, with the abutment pillar 340 of the leaf spring lifting arm 332 resting on the periphery of the bimetallic actuator 202. When the actuator 202 operates when liquid in the vessel boils, the pillar 340 will be lifted by the actuator 202, so pivoting the arm 332 in the journal 326 and lifting the leaf spring 88.

Should the mechanism initially be set in the long boil condition by pressing the long boil push rod 324, then the selector arm 302 will be pivoted up from its short boil position, so that the abutment pillar 240 no longer engages the actuator 202. Rather, the long boil actuating arm 318 moves into engagement with the bimetallic actuator 322 under the plate 206. The bimetallic actuator 322 is arranged thermally remote from the sump of the heater and is heated through conduction through the mounting plate 206. A choke region 370 in the plate slows down the transfer of hat to the actuator 322, so that it will not operate until some time after the actuator 202 operates.

Thus when the control is set to long boil, the actuator 202 will operate first, but this will have no effect on the mechanism, as it will not move the leaf lifting arm 332. After a predetermined further time, however, the long boil actuator 322 will operate, pivoting the selector arm 302 anti-clockwise in the sense of Figure 4 and moving it overcentre with respect to the omega spring 312. With this movement, the pillar 340 on the leaf spring lifting arm 332 moves into engagement with the periphery of the bimetallic actuator 202 (which will be raised, having already operated) and continued movement of the selector arm 302 will cause the leaf lifting arm 332 to pivot anticlockwise about the pillar 340 to lifting the leaf spring 88.

As will be recalled, when liquid in the vessel boils, the actuator 202 operates the high/low power mechanism to connect the heater track sections 56,58 in series to provide 500W heating power, if they are not already so connected. If the airpot is initially set for a high power, short boil, then the leaf spring 88 will be lifted at substantially the same time as the high/low power mechanism switches the track sections 56,58 into series. If the control is set for a high power, long boil then the actuator 202 will act to connect the track sections 56, 58 in series some time before the long boil actuator 322 operates. When the leaf spring 88 is lifted by the leaf spring lifting arm 332, it breaks the electrical connection between contact 80a and heater terminal contact 80, which places the three track sections 56, 58, 60 in series to provided a low simmer power. The electrical circuit to the heater is provided from the neutral mains connector pin 102 through the simmer control unit 500 to the simmer track terminal contact 82, through the simmer track section 60, the heater track section 58 to the terminal 76, through the bridging leaf springs 94, 96 to terminal contact 72 of the track section 56, through the track section 56 to the terminal contact 74 and through leaf spring 90 to the line connector mains pin 112.

It will be appreciated that when during heating, electrical contact is made to the terminal contact 80, the simmer element 60 is effectively shorted out, as both of its ends will be at the same, neutral, potential.

As long as the contact remains broken at terminal 80, the heater will cycle solely depending on the setting of the simmer control unit 500, whose construction and operation will be described further below.

Also, the operation of the mechanism above returns the selector arm 302 to its short boil position. Furthermore, the lifting of the leaf spring 88 also moves the indicator 368 to its simmer indicating position via the arm 360.

If it is desired to reboil liquid in the airpot after the heater begins to simmer, then a reboil mechanism 400 is provided as will now be described.

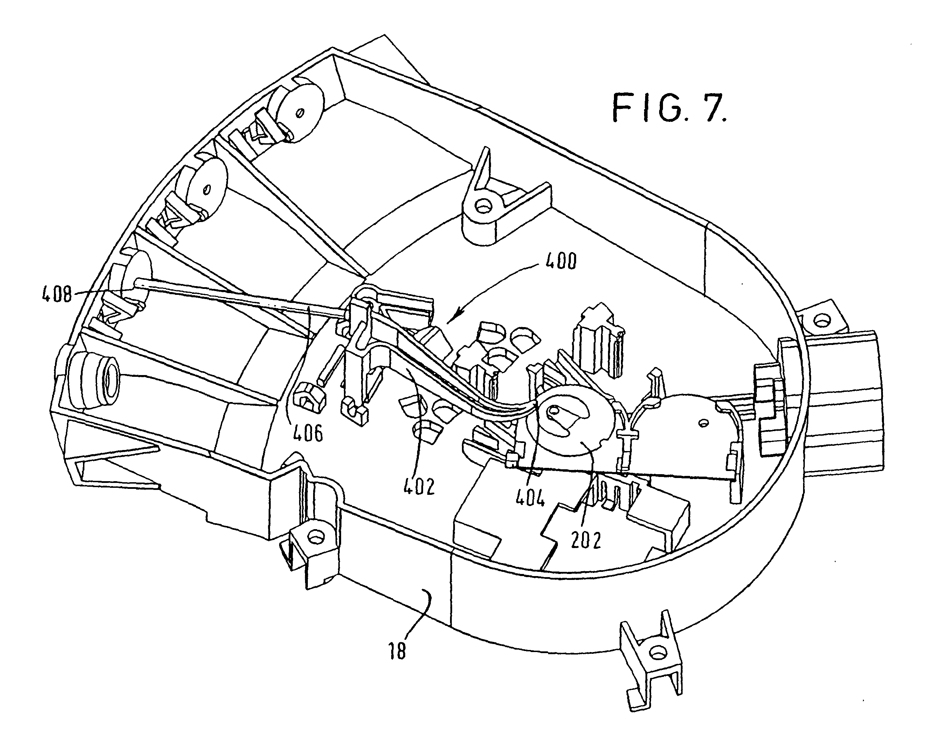

### REBOIL MECHANISM (FIG. 7)

Once liquid in the airpot has boiled and the heater begins to simmer, it will continue to simmer until either the actuator 202 falls below its reset temperature (which may happen if the airpot is turned off, or if cold water is added) or a user operates a reboil mechanism 400. The preferred actuator reset temperature is about 50°C, which allows the actuator to reset if, as is typical, a volume of liquid in the vessel at room temperature (say 20°C) is added to a similar volume of liquid at about 80°C.

The reboil mechanism 400 comprises a reboil lever arm 402 pivotally mounted in the moulding 18. The reboil lever arm 402 has a nose 404 which overlies the periphery of the bimetallic actuator 202. The lever arm 402 also acts on a push rod 406 which extends through a further aperture 408 in the front face 236 of the control moulding 18, which is accessible through the window 238 provided in the airpot bottom moulding 240, which window 238 is covered by a diaphragm or the like for pushing by a user. When the push rod 406 is pressed, it will cause the nose 404 to pivot down onto the periphery of the actuator 202 so as to reset it. As it does so, the leaf spring lifting arm 332 is lowered to remake the contact at heater terminal contact 80, so shorting out the simmer track portion 60 and once again connecting the track sections 56, 58 in series to provide low power heating. At the same time, the simmer indicator arm 360, which rests on the leaf spring 88, returns to its heating position under the action of its counterweight 370, thereby changing the condition of the indicator 268 which moves from a simmer to a boiling condition.

Should high power boiling then be required, the high power push rod 232 may be pressed to pivot the lever arm 210 to reconnect the track sections 56, 58 in parallel.

### SIMMER UNIT (FIGS. 8, 9 & 10)

The simmer unit 500 is a completely separate, precalibrated, unit which is mounted in a recess 502 formed in the base of the control moulding 18 from below, as shown in Figure 7. The simmer unit is retained in the recess by moulded clips 504 provided on the control moulding 8. As described above, a conductive link 106 extends into the mounting recess 502 to connect the neutral side of the power supply to the simmer unit 500.

As shown in Figures 8, 9 and 10, the simmer control unit 500 comprises a stack of components held together by rivets 506. The stack includes, from the bottom up, a base plate 508, a lower insulator body 510, a contact mounting plate 512, a spring plate 514, and an upper insulator body 516.

The base plate 508 is of a thermally and electrically conductive material such as copper, and has a downwardly projecting leg 520 for engaging a portion of the simmer track 60 when the simmer unit 500 is mounted to the heater. This leg 520 therefore senses the temperature of the track 60 which will be indicative of the liquid temperature within the vessel. The base plate 508 also has a downwardly extending electrical contact 522 which engages with the terminal contact 82 of the simmer track 60. Finally it has a forwardly projecting portion 524 which acts as a backstop for the movable contact 526 of a snap acting bimetallic actuator 528.

The actuator 528 is arranged in thermal contact with the plate 508 so as to receive heat from it and is slightly domed so as to reverses its curvature when heated above a certain operating temperature, as is well known in the art. In fact, the actuator 528 has a rearwardly projecting tongue 530 which is rivetted by rivets 532 to the plate 508. The actuator 528 has a contact 526, mounted on a movable tongue 534 defined by a U shaped cut out 536 of the actuator 528, which in use makes and breaks electrical contact with a fixed contact 538 formed on a projection 540 of the contact mounting plate 512.

One end of the side limbs 542 of actuator 528 are clamped between a bow spring 544 and the arms 546 of an L shaped adjustment lever 548 which is pivotally mounted in V grooves 550 provided in the lower insulator body 510.

The upper end 552 of the lever 548 is biased by the action of the bow spring 544 against an adjustment screw 554 which is mounted in a threaded boss 556 formed in the upper insulator body moulding. The combined action of the bow spring 544 and the lever arm 546 acting on the side limbs 542 of the actuator 528 determine its operating characteristics, and provide an adjustment mechanism as will be discussed further below.

The contact mounting plate 512 is located between the upper and lower insulator bodies 510, 516 and is clamped against the spring plate 514 which has four resilient leaves 560 extending therefrom. These leaves 560 which act against the bottom of the recess 502 act not only to bias the simmer unit 400 into good thermal contact with the heater 4, but one of them also engages with the conductive link 106 which extends into the mounting recess 502.

The lower insulator body 510 comprises a pair of upwardly extending hollow bosses which pass up through holes provided in both the contact mounting plate 512 and the spring plate 514 so as both to locate the stack components with respect to one another, but also electrically to insulate the contact plate 512 and the spring plate 514 from the rivets 506 which hold the stack together and which pass right through the stack from the base plate 508 (with which they are electrically connected) to the upper surface of the upper insulator body 516.

As stated above, the upper insulator body 516 has a threaded boss 556 which receives an adjustment screw 554. The adjustment lever 548 is pivotally biased against the adjustment screw 554 by the action of the bow spring 544 through the actuator 528. As can be seen from Fig 1, when the simmer unit 500 is installed in its recess 502 in the control moulding, the head of the adjustment screw 554 extends through the base of the recess 502 and is engageable with a complementary shaped head 562 of a rod 564. The other end of the rod 564 engages with an adjustment screw 566 mounted in an aperture 568 the front face of the control moulding 18 and which can be manipulated by a user, for example with a screw driver.

It will be appreciated that as the adjustment screw 554 is moved backwards and forwards by rotation of the rod 564, the lever 548 will pivot and move the side limbs 542 of the actuator 528 against the action of the bow spring 544. This will change the operating point of the actuator 528, so meaning that a higher or lower sensed temperature will be needed to operate the actuator 528. Thus the desired water simmering temperature can be set simply by the user by adjusting the external screw head 566. The spring biasing arrangement described above allows the geometry of the blade to be varied in two directions from its neutral, as manufactured position, thereby affording a greater range of available adjustment.

When the control unit 2 switches to its simmer mode by operation of the mechanism 300 as described above, the simmer unit 500 will cycle the heater by opening and closing the contacts 526, 538, which break the neutral side of the supply to the element.

### DRY SWITCH ON PROTECTION (FIGS. 8 AND 11)

In the event that the vessel boils dry or is switched on without any liquid in it, a dry switch on protection mechanism 600 is also provided.

This mechanism, which is described primarily with reference to Figures 4, 8 and 11 comprises a snap action bimetallic actuator 602 which, as shown in Figure 6 is mounted by its central tongue 604 on the face of the control moulding 18 which faces the heater 4. In fact, the tongue 604 of the actuator is mounted to a stainless steel leaf spring 606 which is clicked into a mounting pillar 608 on the control housing 18. This spring 606 acts resiliently to bias the actuator 602 against the track portion 56b (Fig. 2) when the control unit 2 is mounted to the heater 4. The intended position of the actuator 602 is indicated in phantom on Fig. 2.

A nose 610 of a dry switch on lever arm 612 which is pivotally mounted in a support 614 provided in the moulding 18 extends through the base of the control moulding 18 to engage the actuator 602.

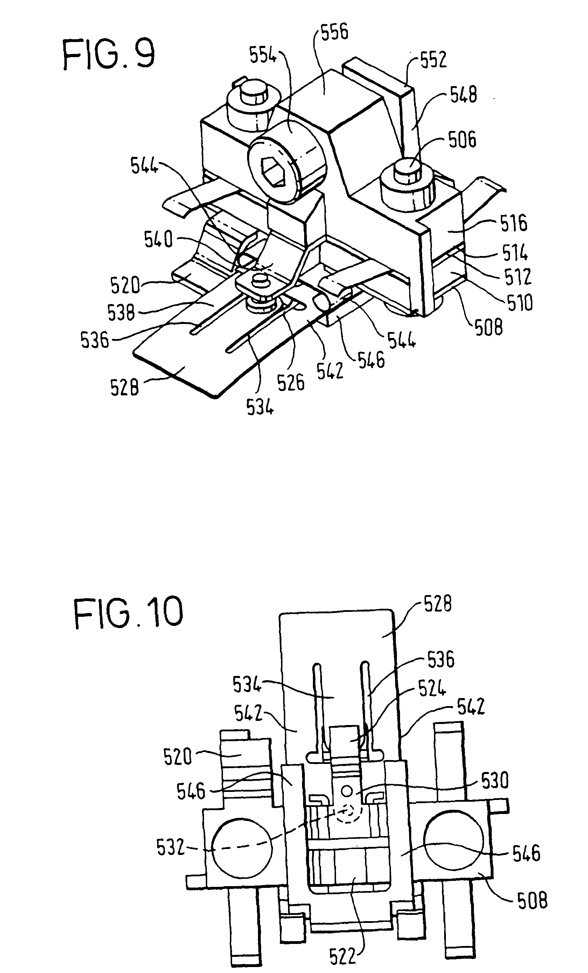

The dry switch on lever arm 612 has two generally U shaped limbs 616, 618 (Figure 9) which have respective lugs 620, 622, 624 and 626 which engage under the respective leaf springs 86, 88, 90, 92.

In the event that the heater track section 56b overheats say if the airpot is turned on without water in it, the actuator 602 will operate, to push on the nose 610 of the dry switch on lever arm 612, so pivoting the dry switch on lever arm 612 to lift all four leaf springs 88, 90, 92, 94. This breaks the electrical connections to the terminal contacts 70, 80, 74, 78 of the heating tracks 56, 58, which completely disconnects the power supply to these tracks, irrespective of the setting of the control and thus irrespective of which of these contacts may already have been made. It will also be appreciated that this will also disconnect the power supply to the simmer track section 60. Once the heater 4 cools, the actuator 602 will automatically reset, allowing the contacts to be re-made, and the heater will then cycle on and off until it is switched off or liquid is added to the airpot to prevent the overheating.

As can also be seen in Figure 11 in particular, a pair of lugs 630, 632 extend from the top of the dry switch on lever arm 612 and engage with hooks 634 provided on a further generally L-shaped lever arm 636. This lever arm 636 is pivotally mounted in bearings 638, 640 in the control moulding 18. The other end of the lever arm 636 is provided with a coupling 642 for connection to a further push rod (not shown) which is connected to an interlock mechanism in the airpot which is arranged such that should the lid of the airpot be opened, or should a user attempt to dispense liquid from the vessel, the push rod will pull up on the lever arm 536 (in the sense of Figure 11, so rotating the dry switch on lever arm 612 to open the four contacts and disable the heater. This will help to prevent injury to anyone using the airpot, as liquid in the airpot will not be boiling when the airpot is opened or dispensing occurs.

## Claims

1. A thick film heater (4) comprising an electrical resistive track (56, 58, 60) provided on an insulating substrate (54), two predetermined sections (56, 56a)of said track having a predetermined current carrying capacity being bridged by a glass material, the configuration of the track and the glass material being chosen such that at a predetermined temperature, the leakage current between the track sections rises to the extent that it causes a failure overload current to flow through one or both of said sections which is substantially above its current carrying capability, **characterised in that** said sections (56, 56a) are positioned away from at least one end of the track so as to limit the said overload current.

2. A thick film heater as claimed in claim 1 wherein the glass material is applied as an overglaze.

3. A thick film heater as claimed in claim 1 or 2 wherein said track is provided with a localised region (56b) having a relatively small potential drop thereacross adapted to receive a thermally sensitive actuator of a control for the heater.

4. A thick film heater as claimed in claim 3 wherein said region (56) is a serpentine region.

5. A thick film heater as claimed in claim 4 wherein said serpentine region (56b) comprises at least two parallel track lengths connected by bridges of a high conductivity material.

6. A thick film heater as claimed in claims 4 or 5 wherein said serpentine region (56b) is arranged between said one of said track sections (66) and said end of said track.

7. A thick film heater as claimed in any preceding claim comprising lengths of track arranged geometrically parallel to each other, said lengths being bridged by bridges of a high conductivity material.

8. A thick film heater as claimed in any preceding claim wherein the heater comprises high power and low power heating tracks.

9. Liquid heating apparatus comprising a heater as claimed in any preceding claim.

## Patentansprüche

1. Dickfilmheizeinrichtung (4), umfassend:
eine elektrische Widerstandsbahn (56, 58, 60), welche auf einem Isolationssubstrat (54) vorgesehen ist, wobei zwei vorbestimmte Abschnitte (56, 56a) der Bahn mit einer vorbestimmten Strombelastbarkeit durch ein Glasmaterial überbrückt ist, wobei die Konfiguration der Bahn und des Glasmaterials derart ausgewählt ist, dass bei einer vorbestimmten Temperatur der Kriechstrom zwischen den Bahnabschnitten soweit ansteigt, dass er bewirkt, dass ein Fehlerüberlastungsstrom durch einen oder beide Abschnitte fließt, welcher im Wesentlichen oberhalb dessen Strombelastungsfähigkeit liegt,
**dadurch gekennzeichnet,dass** die Abschnitte (56, 56a) von wenigstens einem Ende der Bahn aus entfernt positioniert sind, um den Überlastungsstrom zu begrenzen.

2. Dickfilmheizeinrichtung nach Anspruch 1, wobei das Glasmaterial als ein Überzug aufgetragen ist.

3. Dickfilmheizeinrichtung nach Anspruch 1 oder 2, wobei die Bahn mit einem lokalisierten Bereich (56b) mit einem relativ kleinen Potentialabfall über diesen hinweg versehen ist, welcher dazu ausgebildet ist, einen thermisch sensitiven Aktuator einer Steuer/Regeleinrichtung für die Heizeinrichtung aufzunehmen.

4. Dickfilmheizeinrichtung nach Anspruch 3, wobei der Bereich (56) ein Serpentinenbereich ist.

5. Dickfilmheizeinrichtung nach Anspruch 4, wobei der Serpentinenbereich (56b) wenigstens zwei parallele Bahnlängen umfasst, welche durch Brücken aus einem hochleitfähigen Material verbunden sind.

6. Dickfilmheizeinrichtung nach Anspruch 4 oder 5, wobei der Serpentinenbereich (56b) zwischen dem einen der Bahnabschnitte (66) und dem Ende der Bahn angeordnet ist.

7. Dickfilmheizeinrichtung nach einem der vorhergehenden Ansprüche, welche Bahnlängen umfasst, die geometrisch parallel zueinander angeordnet sind, wobei die Längen durch Brücken aus einem hochleitfähigen Material überbrückt sind.

8. Dickfilmheizeinrichtung nach einem der vorhergehenden Ansprüche, wobei die Heizeinrichtung Heizbahnen für hohe Leistung und für niedrige Leistung umfasst.

9. Flüssigkeitsheizvorrichtung, welche eine Heizeinrichtung nach einem der vorhergehenden Ansprüche umfasst.

## Revendications

1. Elément chauffant à couche épaisse (4) comprenant une piste électriquement résistive (56, 58, 60) agencée sur un substrat isolant (54), deux sections prédéterminées (56, 56a) de ladite piste présentant une capacité de transfert de courant prédéterminée étant couplées par un matériau à base de verre, la configuration de la piste et le matériau à base de verre étant choisis de telle sorte qu'à une température prédéterminée, le courant de fuite entre les sections de piste s'élève à une telle valeur qu'il provoque le passage d'un courant de surcharge de défaillance qui est sensiblement supérieur à sa capacité de transfert de courant à travers l'une desdites sections ou les deux, **caractérisé en ce que** lesdites sections (56, 56a) sont positionnées à l'écart d'au moins une extrémité de la piste de manière à limiter ledit courant de surcharge.

2. Elément chauffant à couche épaisse selon la revendication 1, dans lequel le matériau à base de verre est appliqué sous la forme d'un revêtement vitrifié.

3. Elément chauffant à couche épaisse selon la revendication 1 ou 2, dans lequel ladite piste comporte une zone localisée (56b), à travers laquelle se produit une chute de potentiel relativement faible, adaptée afin de recevoir un actionneur thermosensible d'un élément de commande de l'élément de chauffage.

4. Elément chauffant à couche épaisse selon la revendication 3, dans lequel ladite zone (56) est une zone en serpentin.

5. Elément chauffant à couche épaisse selon la revendication 4, dans lequel ladite zone en serpentin (56b) comprend au moins deux segments de piste parallèles reliés par des jonctions en un matériau de forte conductivité.

6. Elément chauffant à couche épaisse selon les revendications 4 ou 5, dans lequel ladite zone en serpentin (56b) est agencée entre ladite première desdites sections de piste (66) et ladite extrémité de ladite piste.

7. Elément chauffant à couche épaisse selon l'une quelconque des revendications précédentes, comprenant des segments de piste agencés géométriquement parallèlement l'un à l'autre, lesdits segments étant couplés par des jonctions en un matériau de forte conductivité.

8. Elément chauffant à couche épaisse selon l'une quelconque des revendications précédentes, dans lequel l'élément chauffant comprend des pistes chauffantes de forte puissance et de faible puissance.

9. Dispositif de chauffage de liquide comprenant un élément chauffant selon l'une quelconque des revendications précédentes.
